# EUROPÄISCHE PATENTSCHRIFT

(11) **EP 2 834 050 B1**
(45) Veröffentlichungstag und Bekanntmachung des Hinweises auf die Patenterteilung: **24.08.2016**
(21) Anmeldenummer: 13714909.2
(22) Anmeldetag: 05.04.2013
(51) Int. Cl.: B25J 13/00, G05B 19/00

(54) **VERFAHREN ZUR BEDIENUNG EINES INDUSTRIEROBOTERS**
METHOD FOR OPERATING AN INDUSTRIAL ROBOT
PROCÉDÉ POUR COMMANDER UN ROBOT INDUSTRIEL

(30) Priorität: 05.04.2012 DE 102012103030
(43) Veröffentlichungstag der Anmeldung: 11.02.2015
(73) Patentinhaber: Reis Group Holding GmbH & Co. KG, 63785 Obernburg (DE)
(72) Erfinder: SOM, Franz, 64750 Lützelbach (DE)
(74) Vertreter: Stoffregen, Hans-Herbert
(86) Internationale Anmeldenummer: PCT/EP2013/057179
(87) Internationale Veröffentlichungsnummer: WO 2013/150130

(56) Entgegenhaltungen:
- DE-A1-102007 018 607
- US-A- 5 465 215
- US-A- 5 937 143

## Beschreibung

### Verfahren zur Bedienung eines Industrieroboters

Die Erfindung bezieht sich auf ein Verfahren zur Bedienung eines Industrieroboters mittels eines ein grafisches Bediener-Interface mit Touch-Display aufweisenden Bediengerätes.

Eine Vorrichtung zum Steuern eines Industrieroboters in Form eines Handbediengerätes ist in der DE 10 2010 039 540 A1 beschrieben. Das Handbediengerät kann mit einer Robotersteuerung gekoppelt werden, um den Industrieroboter zu programmieren bzw. zu steuern.

Das Handbediengerät umfasst eine Elektronik, die einen Mikroprozessor umfasst, um mit der Robotersteuerung kommunizieren zu können. Ferner umfasst das Handbediengerät eine als Touchscreen ausgebildete Anzeige, eine Not-Austaste und einen als Schloss ausgebildeten Umschalter. Zur manuellen Bewegung z.B. eines Roboterarms umfasst das Handbediengerät verschiedene, voneinander unabhängig manuell betätigbare Eingabemittel bzw. Verfahrmittel, die z.B. als 6D-Maus oder als Tipp-Tasten ausgebildet sind. Mittels des Touchscreens besteht die Möglichkeit, jedem der Verfahrmittel sein eigenes Bezugskoordinatensystem zuzuordnen.

Bei der bekannten Ausführungsform erfolgt die Steuerung des Industrieroboters jedoch ausschließlich über die manuell betätigbaren Eingabemittel, so dass das Handbediengerät in seiner Herstellung aufwändig und im Betrieb anfällig ist.

Eine weitere Vorrichtung zur Bedienung eines Industrieroboters ist in der DE 10 2010 025 781 A1 beschrieben. Das Handgerät in Form eines mobilen Telefons weist einen Touchscreen auf, der einerseits als Ausgabemittel zum Ausgeben von Informationen von der Robotersteuerung, insbesondere zur Darstellung einer Bedienoberfläche, und andererseits als Befehlseingabemittel zum Eingeben von Steuerbefehlen mittels Tasten dient.

Das Handgerät ist mittels einer Klemmeinrichtung, wie sie im Prinzip beispielsweise von Halterungen für mobile Telefone in Kraftfahrzeugen bekannt ist, lösbar an einer tragbaren Sicherheitseinrichtung befestigt und mit dieser über eine USB-Schnittstelle verbunden. Die Sicherheitseingabeeinrichtung weist einen Not-Halt-Knopf, einen Zustimm-Taster sowie einen Betriebsarten-Wahlschalter auf. Nachteilig bei dieser Ausführungsform ist, dass eine Bedienperson zur sicheren Bedienung der virtuellen Tasten stets gezwungen ist, auf den Touchscreen zu blicken, um Fehleingaben zu vermeiden. Gleiches gilt bei widrigen Umgebungsbedingungen wie beispielsweise starkem Lichteinfall oder Dunkelheit, die eine Bedienung des Touchscreens erschweren würden.

Aus der DE 10 2010 025 781 A1 ist ein Verfahren zur Bedienung eines Industrieroboters mittels eines ein grafisches Bediener-Interface mit Touch-Display aufweisenden Bediengerätes bekannt, umfassend die Verfahrensschritte: Anzeigen zumindest eines eine Funktion oder Betriebsart des Industrieroboters repräsentierenden virtuellen Bedienelementes auf dem Touch-Display, Auswahl einer gewünschten Funktion oder Betriebsart durch Betätigen des zumindest einen virtuellen Bedienelementes durch einen Bediener, Erfassen der Betätigung des zumindest einen virtuellen Bedienelementes und Aussenden eines der ausgewählten Funktion oder Betriebsart entsprechenden Steuerbefehls an ein Sicherheitsmittel der Robotersteuerung, Auswertung des Steuerbefehls, Ausführen der gewählten Funktion oder Betriebsart, wenn ein Zustimm-Taster korrekt betätigt ist bzw. Identifikation übereinstimmt. 21. Juli 2015/ 54426 - Reinschrift

Der Literaturstelle Niederhuber, Ch.: "Bedienpanel: Multitouch-Technologie mit Haptischen Elementen vereint", in: etz Elektrotechnik + Automation, Heft 1-2/2012, S. 2-4, ist ein Multitouch-Bedienpanel mit haptischen Elementen zu entnehmen, bei dem die Eingaben über virtuelle Bedienelemente am Bedienpanel mittels Ein-Finger- und Zwei-Finger-Gesten sowie Wischbewegungen erfolgt.

Der US 5 937 143 A ist ein Verfahren zur Bedienung eines Industrieroboters mittels eines Bediengerätes zu entnehmen, bei dem das Bediengerät ein Touch-Display mit grafischem Bediener-Interface aufweist.

Aus der DE 102 96 965 B4, WO 2010/009488 A2 und WO 2011/150440 A2 sind Verfahren zur Bedienung eines Industrieroboters mittels eines ein grafisches Bediener-Interface mit Touch-Display aufweisenden Bediengerätes bekannt, bei denen die Eingaben von einer Sicherheitssteuerung überwacht werden.

Davon ausgehend liegt der vorliegenden Erfindung die Aufgabe zugrunde, ein Verfahren der eingangs genannten Art derart weiterzubilden, dass die Sicherheit bei der Bedienung eines Industrieroboters erhöht wird.

Die Aufgabe wird durch ein Verfahren mit folgenden Verfahrensschritten gelöst:
- Anzeigen zumindest eines eine Funktion oder Betriebsart des Industrieroboters repräsentierenden virtuellen Bedienelementes auf dem Touch-Display,
- Auswahl einer gewünschten Funktion oder Betriebsart durch Betätigen bzw. Berühren des zumindest einen virtuellen Bedienelementes durch einen Bediener,
- Erfassen der Betätigung bzw. Berührung des zumindest einen virtuellen Bedienelementes und Aussenden eines der ausgewählten Funktion oder Betriebsart entsprechenden Steuersignals an eine Sicherheitssteuerung,
- Auswertung des Steuersignals in der Sicherheitssteuerung und Auswahl einer der ausgewählten Funktion oder Betriebsart zugeordneten grafischen Information,
- Erzeugen eines Bildes, in dem die grafische Information an einer von der Sicherheitssteuerung bestimmten Anzeige-Position positioniert ist,
- Übertragung des Bildes an das Bediengerät und Anzeige des Bildes mit der grafischen Information auf dem Touch-Display,
- Erfassen einer Berührungs-Position bei Berührung der angezeigten grafischen Information durch den Bediener,
- Rücksenden der Berührungs-Position an die Sicherheitssteuerung,
- Vergleich der empfangenen Berührungs-Position mit der vorgegebenen Anzeige-Position und
- Ausführen der gewählten Funktion oder Betriebsart, wenn die BerührungsPosition mit der Anzeige-Position übereinstimmt.

Eine bevorzugte Verfahrensweise zeichnet sich dadurch aus, dass die Anzeige-Position, in der die grafische Information innerhalb des Bildes angezeigt wird, zufällig bestimmt wird.

Die Übertragung des Bildes mit integrierter grafischer Information erfolgt als Bilddatei wie Bitmap von der Sicherheitssteuerung zu dem Bediengerät und wird sodann auf dem Touch-Display in einer von der Sicherheitsteuerung vorgegebenen oder der Sicherheitssteuerung bekannten Position angezeigt.

Zu dem Touch-Display ist anzumerken, dass es sich hierbei vorzugsweise um einen marktüblichen Touchscreen mit glatter Oberfläche handelt, der vorzugsweise als kapazitiver Touchscreen ausgebildet ist, gleichwenn auch ein resistiver Touchscreen in Frage kommt.

Vorzugsweise wird als grafische Information ein der Funktion oder Betriebsart entsprechendes virtuelles Bedienelement angezeigt oder bildhaft ein Zahlencode dargestellt.

Gemäß eines bevorzugten Verfahrens wird die grafische Information in einem Speicher der Sicherheitssteuerung in sicherer Technik vorzugsweise zweikanalig gespeichert. Auch die Auswertung des Steuersignals in der Sicherheitseinrichtung erfolgt in sicherer Technik, vorzugsweise zweikanalig.

Gemäß einer weiteren bevorzugten Ausführung des Verfahrens ist vorgesehen, dass die Berührung des virtuellen Bedienelementes auf der Oberfläche des Touch-Displays durch Ermitteln einer ersten Koordinate eines Berührungspunktes erfasst wird und dass eine Aus-lösung der Funktion des virtuellen Bedienelementes erfolgt, wenn die erste Koordinate des Berührungspunktes nach bleibendem Kontakt mit der Oberfläche des Touch-Displays einen vorgegebenen Koordinatenbereich durch eine manuelle Aktion der Bedienperson verlässt.

Dabei kann die manuelle Aktion durch eine Gestik der Bedienperson ausgelöst werden. Die Gestik kann durch Ziehen eines Fingers der Bedienperson auf dem Touch-Display in den oder aus dem vorgegebenen Koordinatenbereich ausgeführt werden. Vorzugsweise wird die Gestik in eine definierte Richtung ausgeführt, wobei die Sensibilität auf die Fingerbewegung, die Intensität der Gestik stufenlos eingestellt werden kann, um eine Aktion auszulösen.

Des Weiteren bezieht sich die Erfindung auf ein eigenerfinderisches Verfahren zur Bedienung eines Industrieroboters mit einem Handgerät. Dabei ist vorgesehen, dass die Auslösung einer Touch-Funktion eine manuelle Aktion des Bedieners auf dem Touch-Display erfordert. Um ein versehentliches Auslösen von virtuellen Bedienelementen durch unbeabsichtigte Berührung zu verhindern, wird eine Funktion erst ausgelöst, wenn nach der Berührung des Touch-Displays eine spezielle "Kleingestik" ausgeführt wird, z.B. Verziehen des Fingers in eine definierte Richtung. Somit ergibt sich ein "reliable touch".

Die zum Auslösen einer Funktion erforderliche Gestik, also die erforderliche Intensität oder Art der Gestik, kann stufenlos eingestellt werden: Sie reicht von einer einfachen Fingerberührung, allgemein übliche Bedienung des Touch-Displays, bis hin zu einer definierten Geste. Durch haptische Marken, wie die spezielle Ausprägung der Fingermulden im Displayrand, kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Die erfindungsgemäße Vorrichtung zeichnet sich gegenüber dem Stand der Technik insbesondere dadurch aus, dass die Anzahl der Hardwarekomponenten auf ein absolutes Minimum reduziert wird. Alle Bedienfunktionen werden konsequent in Touch-Software realisiert, mit Ausnahme der sicherheitsgerichteten Schalter "Not-Halt" und "Zustimmung". Es sind keine weiteren elektrischen Komponenten wie Folientasten, Schalter oder Signallampen erforderlich. Dadurch ist das System wartungsarm.

Der erreichte Platzgewinn geht zugunsten eines großen komfortablen Touch-Displays. Die auf dem Touch-Display dargestellten virtuellen Bedienelemente und Anzeigen sind für die Industrieanwendung angelegt und sind kontrastreich und groß dargestellt, so dass eine zuverlässige Bedienung möglich ist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden Ausführungsbeispielen.

Es zeigen:
- Fig. 1: ein Programmierhandgerät zur Bedienung eines Industrieroboters,
- Fig. 2: einen Abschnitt eines an das Touch-Display angrenzenden Displayrahmens des Programmierhandgerätes,
- Fig. 3: einen zweiten Abschnitt eines an das Touch-Display angrenzenden Displayrahmens,
- Fig. 4: einen dritten Abschnitt eines an das Touch-Display angrenzenden Displayrahmens,
- Fig. 5: eine Rückansicht des Programmierhandgerätes,
- Fig. 6: ein schematisches Verfahren zur Bedienung eines Industrieroboters mit einem Bediengerät,
- Fig. 7: einen Ausschnitt einer Bedienoberfläche des Bediengerätes mit virtuellen Bedienelementen,
- Fig. 8: einen Ausschnitt einer Bedienoberfläche des Bediengerätes mit einem Bild mit grafischer Information,
- Fig. 9: eine Bedienoberfläche des Bediengerätes mit verschiedenen Verfahrflächen und

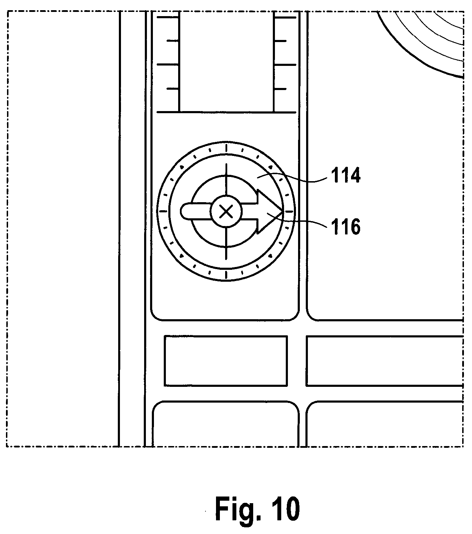

- Fig. 10: ein virtuelles Bedienelement zur Rekalibrierung des Koordinatensystems des Bediengerätes.

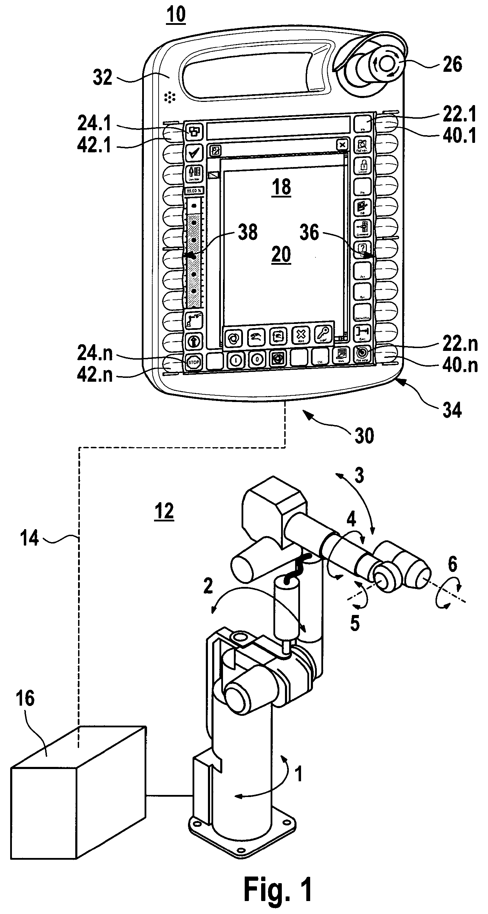

Fig. 1 zeigt eine Vorrichtung 10 in Form eines Programmierhandgerätes zur Bedienung eines Industrieroboters 12. Dazu ist das Handgerät 10 über eine drahtlose oder drahtgebundene Kommunikationsverbindung 14 mit einer Robotersteuerung 16 verbunden. Das Handgerät 10 umfasst ein grafisches Bediener-Interface 18 mit einem berührungsempfindlichen Display 20 - nachfolgend Touch-Display genannt. Das Touch-Display 20 dient zur Anzeige zumindest eines virtuellen Bedienelementes 22.1...22.n, 24.1...24.n, welches eine Funktion zur Steuerung, Programmierung oder Bedienung des Industrieroboters 12 repräsentiert, wobei bei Berührung des virtuellen Bedienelementes 22.1...22.n, 24.1...24.n mit einem Finger einer Bedienperson oder einem Stift die zugeordnete Funktion ausgelöst wird.

Das Handgerät 10 umfasst des Weiteren eine Steuereinheit 30 zur Steuerung des grafischen Bediener-Interface 18 und zur Kommunikation mit der Robotersteuerung 16 sowie einen Positionssensor zur Bestimmung von Position und Neigung des Bediengerätes.

Das grafische Bediener-Interface 18 mit den Touch-Display 20 ist zusammen mit der Steuereinheit 30 in einem Gehäuse 32 angeordnet. Das Gehäuse 32 bildet einen Displayrahmen 34, der das Touch-Display 20 randseitig umschließt. Auf einer Oberseite des Gehäuses 32 ist des Weiteren ein sicherheitsgerichteter "Not-Halt" Schalter 26 angeordnet.

Die virtuellen Bedienelemente 22.1 .... 22.n sowie 24.1 ... 24.n sind entlang jeweils eines an das Touch-Display 20 angrenzenden Rahmenabschnitts 36, 38 des Displayrahmens angeordnet. Um eine Blind-Bedienung der virtuellen Bedienelemente 22.1 ... 22.n bzw. 24.1 ... 24.n zu ermöglichen, sind gemäß eines ersten eigenständigen Erfindungsgedankens in dem Rahmenabschnitt 36, 38 jeweils haptische Marken 40.1 ... 40.n bzw. 42.1 ... 42.n angeordnet. Jeder haptischen Marke 40.1 ... 40.n, 42.1 ... 42.n ist ein virtuelles Bedienelement 22.1 ... 22.n, 24.1 ... 24.n zugeordnet.

Dabei grenzt insbesondere das virtuelle Bedienelement 22.1 ... 22.n, 24.1 ... 24.n unmittelbar an der haptischen Marke 40.1 ... 40.n bzw. 42.1 ... 42.n an, so dass ein unmittelbarer Übergang von der haptischen Marke 40.1 ... 40.n bzw. 42.1 ... 42.n zum virtuellen Bedienelement 22.1 ... 22.n, 24.1 ... 24.n erfolgt. Quasi in einem Zug wird infolgedessen ein entlang einer haptischen Marke 40.1 ... 40.n bzw. 42.1 ... 42.n geführter Finger zum virtuellen Bedienelement 22.1 ... 22.n, 24.1 ... 24.n geführt. Hierdurch werden Fehlbedienungen vermieden bzw. minimiert: Zuerst wird die Position des virtuellen Bedienelementes mit Hilfe der haptischen Marken ertastet und anschließend wird die Funktion durch Berührung des virtuellen Bedienelementes ausgelöst. Ferner ist es nicht erforderlich, dass der Touchscreen, also das Display 20 besonders gestaltet werden muss. Insbesondere und in Abweichung vom Stand der Technik ist es nicht erforderlich, dass auf das Display besondere überlagerte Materialien angebracht werden, wodurch andernfalls Transparenzeinbußen auftreten.

Die haptischen Marken 40.1 ... 40.n bzw. 42.1 ... 42.n bilden eine Führung, durch die ein Finger einer Bedienperson zu dem zugeordneten virtuellen Bedienelement 22.1 ... 22.n, 24.1 ... 24.n geführt wird.

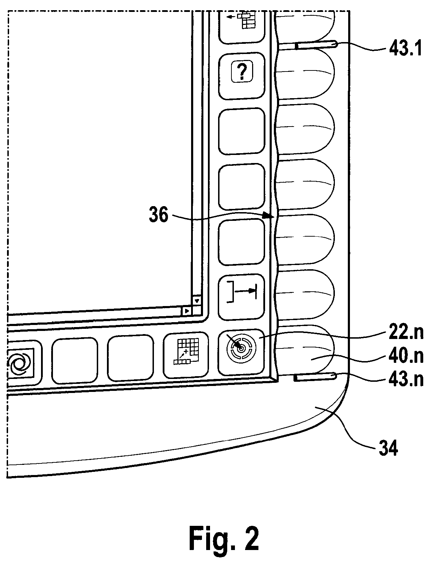

Fig. 2 zeigt eine vergrößerte Darstellung der Bedienelemente 22.1 ... 22.n und den diesen zugeordneten haptischen Marken 40.1 ... 40.n.

Durch die Anordnung der virtuellen Bedienelemente 22.1 ... 22.n bzw. 24.1 ... 24.n entlang der die haptischen Marken 40.1 ... 40.n, 42.1 ... 42.n aufweisenden Rahmenabschnitte 36, 38 wird eine sichere Bedienung der virtuellen Bedienelemente gewährleistet. Dabei dient der abgesetzte und besonders ausgeprägte Rahmenabschnitt 36, 38 zur taktilen Orientierung auf dem Touch-Display 20.

In dem in Fig. 2 dargestellten Ausführungsbeispiel sind die haptischen Marken 40.1 ... 40.n als Fingermulden ausgebildet, die so ausgeformt sind, dass sie mit den Fingern zuverlässig ertastet werden können und eine Führung des Fingers von den Rahmenabschnitten 36, 38 in Richtung auf das zugeordnete virtuelle Bedienelement 22.1 ... 22.n bzw. 24.1 ... 24.n sicherstellen.

Ferner sind haptische Marken 43.1 ... 43.n vorgesehen, die als Noppen ausgebildet und auf einer Oberfläche des Displayrahmens 34 angeordnet sind.

Dadurch wird zum einen die prinzipiell fehlende Haptik eines Touch-Displays 20 kompensiert und zum anderen kann der Bediener die visuelle Aufmerksamkeit auf den Industrieroboter und den Prozess richten, ohne auf das Handbedien- bzw. Handgerät 10 schauen zu müssen, wodurch insgesamt die Bediensicherheit erhöht wird. Eine "Blindbedienung" wird ermöglicht.

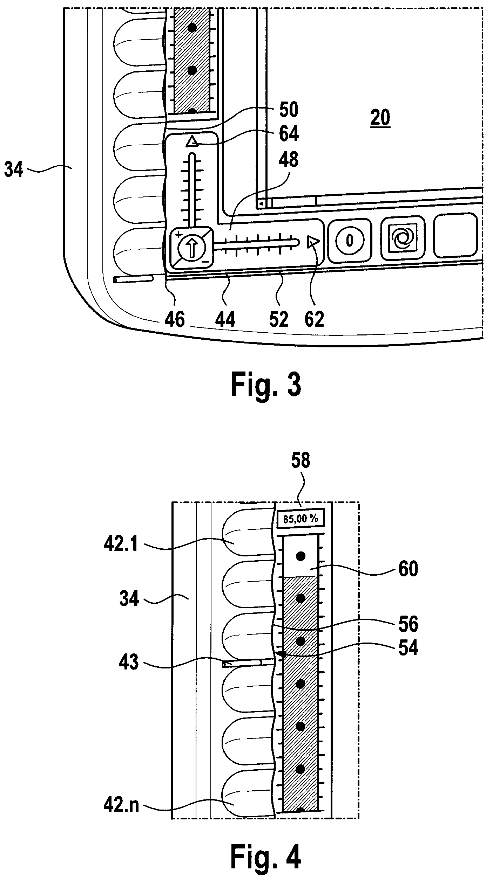

Fig. 3 zeigt eine Ausführungsform einer haptischen Marke 44 als eine an das Touch-Display 20 angrenzende Rahmenecke 46 des Displayrahmens 34. Durch die Rahmenecke 46 des Displayrahmens 34 wird eine eindeutige, exakte Position auf dem Touch-Display 20 definiert. Zu diesen ausgewählten Positionen ist ein virtuelles Bedienelement 48 auf dem Touch-Display 20 vorgesehen, welche beispielsweise in linearer Richtung entlang eines displayseitigen Rahmenabschnitts 50 oder des anderen Rahmenabschnitts 52 der Rahmenecke 44 bewegt wird.

Fig. 4 zeigt eine weitere Ausführungsform einer haptischen Marke 54, die als displayseitiger Rahmenabschnitt 56 des Displayrahmens 34 ausgebildet ist. Entlang des Rahmenabschnitts 56 kann der Finger einer Bedienperson eine Verschiebebewegung ausführen, über die ein entlang des Rahmenabschnitts 56 verlaufendes virtuelles Schiebe-Element 60 verstellt werden kann.

Die in Fig. 1 und 2 dargestellten und als Fingermulden ausgebildeten haptischen Marken 40.1 ... 40.n, 42.1 ... 42.n bilden eine haptische Orientierung auf dem DisplayRand mit hoher Auflösung, z.B. für das Erfühlen von Positionen der virtuellen Bedienelemente 22.1 ... 22.n, 24.1 ... 24.n, da diese unmittelbar neben den Fingermulden angeordnet sind. Jeder Fingermulde kann ein virtuelles Bedienelement eindeutig zugeordnet werden. Die Fingermulden 22.1 .... 22.n, 24.1 ... 24. in sind halb offen ausgeführt und in Richtung des Touch-Displays 20 geöffnet, so dass ein Finger wie in einer Rinne geführt auf das Touch-Display gleiten und dort eine Funktion des virtuellen Bedienelementes 22.1 ... 22.n, 24.1 ... 24.n auslösen kann.

Gemäß eines eigenständigen Erfindungsgedankens ist vorgesehen, dass die Auslösung einer dem virtuellen Bedienelement 22.1...22.n, 24.1...24.n zugeordneten Funktion eine manuelle Aktion der Bedienperson auf dem Touch-Display 20 erfordert. Um ein versehentliches Auslösen der virtuellen Bedienelemente 22.1...22.n, 24.1...24.n durch unbeabsichtigte Berührung zu verhindern, wird eine Funktion erst ausgelöst, wenn nach der Berührung des Touch-Displays 20 eine vordefinierte Gestik wie beispielsweise Verziehen des Fingers in eine definierte Richtung ausgeführt wird. Die Sensibilität der Reaktion auf die Fingerbewegung kann über einen Regler stufenlos eingestellt werden. Somit kann die Intensität der erforderlichen Gestik, um Funktionen auszulösen, stufenlos eingestellt werden. Sie reicht von einer einfachen Fingerberührung, allgemein übliche Bedienung des Touch-Displays 20, bis hin zu einer speziellen kleinen Geste. Durch die besondere Ausprägung der Fingermulden 22.1...22.n, 24.1...24.n im Rahmenabschnitt 36, 38 des Displayrahmens kann der Finger in Fortsetzung der Fingermulden auf das Touch-Display gleiten und dabei eine Funktion auslösen. Merkt der Bediener, dass er eine ungewollte Funktionsauslösung eingeleitet hat, kann er die Funktionsauslösung durch Zurückziehen des Fingers in die Ursprungsposition unterdrücken.

Sobald die Bedienperson mit dem Finger z.B. ausgehend von der Fingermulde 40.n das virtuelle Bedienelement 22.n berührt, werden die entsprechenden Koordinaten des Berührungspunktes auf dem Touch-Display durch die Steuereinheit 30 erfasst. Entsprechend der Definition einer voreingestellten Gestik wird die zugehörige Funktion erst dann ausgelöst, wenn der Finger der Bedienperson einen vorgegebenen Koordinatenbereich verlässt bzw. einen vordefinierten Koordinatenbereich erreicht. Wenn das virtuelle Bedienelement ausgelenkt ist und somit auslösebereit ist (Auslösung erfolgt bei Loslassen des Fingers), wird dies durch eine optische Kennung, z.B. durch eine farbige Umrandung, am Bedienelement gekennzeichnet. Wird eine versehentliche Auslenkung wieder rückgängig gemacht, indem das Bedienelement wieder in den Ursprung zurückgezogen wird, wird dies durch ein Verschwinden dieser optischen Kennung kenntlich gemacht.

Gemäß einer weiteren eigenerfinderischen Ausführungsform der Erfindung werden virtuelle Bedienelemente 48, die z.B. in der Rahmenecke 46 des Displayrahmens 34 platziert sind, mit einer besonderen Gestensteuerung verknüpft. Diese können z.B. entlang der Rahmenabschnitte 50, 52 in zwei Richtungen 62, 64 verschoben werden, wie dies in Fig. 3 dargestellt ist. Jeder Bewegungsrichtung 62, 64 ist eine wählbare Funktion zugeordnet. So ist es z.B. möglich, beim Bewegen entlang des Rahmenabschnitts 52 eine Funktion "A" und beim Bewegen entlang des Rahmenabschnitts 50 eine Funktion "B" zu aktivieren. Der Grad der Auslenkung wird dabei ausgewertet, wobei zwei Auswertungsmöglichkeiten vorgesehen sind.

Gemäß einer ersten Auswertungsmöglichkeit wird der Grad der Auslenkung sofort als analoger Parameter wie Geschwindigkeitsvorgabe an die Funktion übergeben. Wird der Finger in ausgelenkter Stellung losgelassen, springt der Analogwert sofort auf null. Wird der Finger gleitend wieder in die Ausgangsposition 66 geführt, stellt sich der Parameter analog der Auslenkung wieder auf null zurück. Diese Funktion kann verwendet werden, um z.B. ein Bewegungsprogramm in positive oder negative Richtungen zu starten und dabei die Geschwindigkeit stufenlos zu variieren.

Gemäß einer zweiten Auswertungsmöglichkeit ist vorgesehen, dass bei Überschreitung eines definierbaren Schwellwertes eine schaltende Funktion ausgelöst wird. Die Aktivierung der Funktion erfolgt erst dann, wenn der Finger in ausgelenkter Stellung das Touch-Display 20 verlässt. Wird der Finger jedoch ohne Loszulassen auf den Rahmenabschnitten 50, 52 wieder in die Nulllage zurückgeführt, wird die Funktionsauslösung verhindert.

Ein weiterer eigenerfinderischer Gedanke der Erfindung bezieht sich auf die Realisierung einer sogenannten Override-Funktion (Geschwindigkeitsregler), die über das als Schiebe-Bedienelement 60, welches in Fig. 4 dargestellt ist, realisiert wird. Dazu wird das Schiebe-Bedienelement 60 entlang des Rahmenabschnitts 56 und mittig zur haptischen Marke 43 platziert. Dadurch kann die Position des Schiebe-Bedienelementes 60 ertastet und durch Verschiebung des Fingers entlang des Rahmenabschhnitts 56 verstellt werden. Die blinde Verstellung wird durch die haptischen Marken 22.1...22.n 43, 54 der Rahmenabschnitte 38, 56 zusätzlich unterstützt. Der sogenannte Override kann bei einer Verschiebung zwischen zwei haptischen Marken um einen definierten Betrag, z.B. 20 %, verstellt werden. Mittels des randseitig angeordneten Schiebe-Bedienelementes 60 können auch andere analoge Größen wie Prozessparameter in Blindbedienung eingestellt werden.

Ein weiteres eigenerfinderisches Merkmal bezieht sich auf die symmetrische Anordnung der haptischen Marken 22.1...22.n, 24.1...24.n bezogen auf die Längs- bzw. Quermittenachse des Touch-Displays 20. Die Längsmittenachse ist dabei die Gerade, die mittig und parallel zu den Längsrahmenschenkeln des Displayrahmens 34 verläuft. Senkrecht hierzu verläuft die Quermittenachse, also mittig zwischen und parallel zu den kürzeren Querschenkeln des Displayrahmens 34. Dadurch wird gewährleistet, dass das Handgerät 10 sowohl für eine Rechtshänder-Bedienung als auch eine Linkshänder-Bedienung geeignet ist. Dies wird insbesondere durch das konsequente tastenlose Design des grafischen Bediener-Interfaces und durch die symmetrische Anordnung der haptischen Marken erreicht. Somit kann das grafische Bediener-Interface über eine einfache Set-Up-Funktion von Rechtshänder-Bedienung auf Linkshänder-Bedienung umgeschaltet werden. Dabei werden alle Positionen der virtuellen Bedienelemente 22.1...22.n, 24.1...24.n an der Längsmittenachse des Touch-Displays 20 gespiegelt.

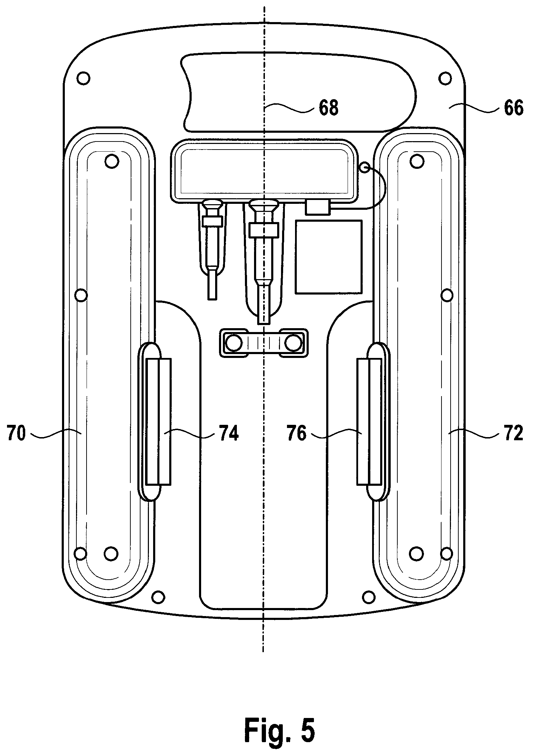

Fig. 5 zeigt eine Rückseite 66 des Gehäuses 32. Auf der Rückseite 66 und symmetrisch zur Längsachse 68 sind Halteleisten 70, 72 angeordnet, an denen das Handgerät 10 mit einer oder mit beiden Händen sicher gehalten werden kann. Die Halteleisten 70, 72 können eine Außengeometrie aufweisen, die Zylinderabschnitten entspricht, wobei die Halteleisten 70, 72 vom Außenrand, also von den Längsrändern des Displayrahmens 34 ausgehen sollten. In jeder Halteleiste 70, 72 ist jeweils ein Zustimm-Schalter oder Zustimm-Taster 74, 76 integriert, von denen wahlweise einer für die Verfahrfreigabe des Industrieroboters betätigt werden muss.

Durch diese symmetrische Anordnung wird einer Handermüdung vorgebeugt, da die Zustimm-Schaltelemente 74, 76 wechselweise mit der linken oder rechten Hand betätigt werden können. Bei Handermüdung kann die jeweils andere Hand die Zustimmung übernehmen, ohne dass dadurch die Verfahrfreigabe für die Roboterbewegung unterbrochen wird.

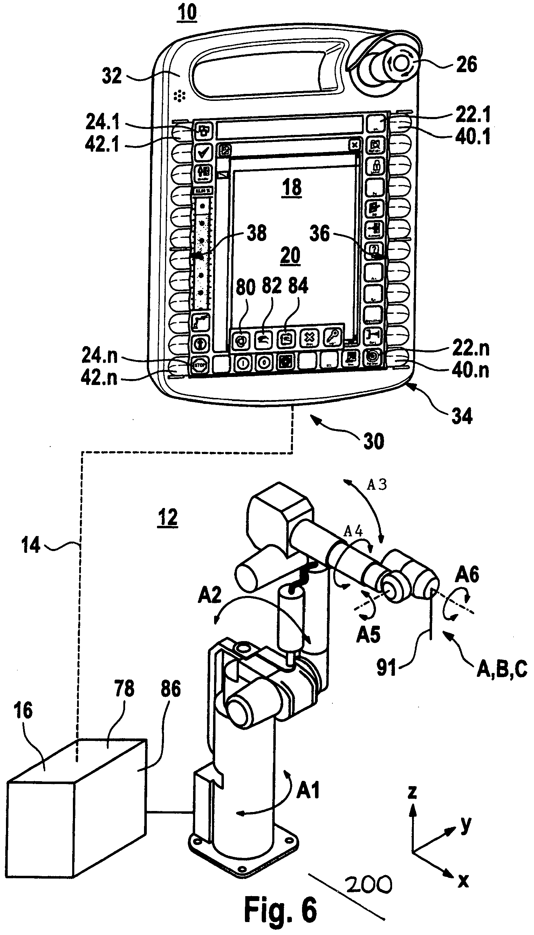

Eine weitere eigenerfinderische Ausführungsform der Erfindung zeichnet sich dadurch aus, dass ein bislang üblicher Schlüsselschalter für die Anwahl der Roboterbetriebsarten "Einrichten", "Automatik", "Automatik-Test" durch eine Softwarefunktion ersetzt wird. Die Besonderheit liegt u.a. in der Datenverarbeitung in sicherer Technik. Das Touch-Display 20 ist prinzipiell ein einkanaliges und somit unsicheres Gerät. Unter Zuhilfenahme einer in die Robotersteuerung 16 gemäß Fig. 6 integrierten Sicherheitssteuerung 78, nachfolgend SafetyController 78 genannt, wird eine sichere Funktionalität der Software gewährleistet. Der SafetyController 78 ist in der Europäischen Patentanmeldung 1 035 953 beschrieben.

Die erfindungsgemäße Lehre ist jedoch nicht auf eine Sicherheitssteuerung entsprechend der Europäischen Patentanmeldung 1 035 953 beschränkt.

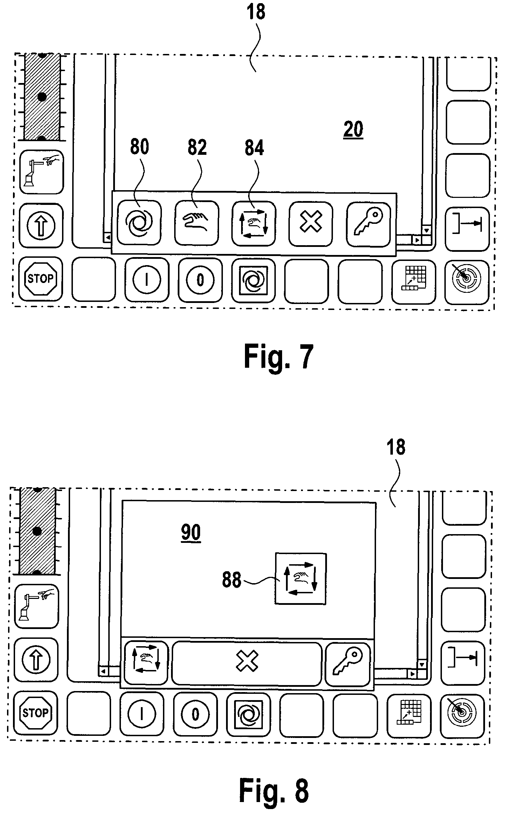

Auf dem Touch-Display 20 werden von der Bedienoberfläche 18 verschiedene Betriebsart-Optionen in Form von virtuellen Bedienoberflächen 80, 82, 84 wie Softkeys zur Auswahl angeboten, wie dies in Fig. 7 dargestellt ist. Über die Berührung eines dieser Softkeys 80, 82, 84 wählt der Bediener eine neue Betriebsart "X" aus. Von der Software der Bedien-oberfläche wird die neu ausgewählte Betriebsart als Kommando "Anforderung neue Betriebsart-X" an den SafetyController 78 gesendet. Der SafetyController 78 entnimmt aus seinem Speicher 86 eine dieser Betriebsart entsprechende grafische Information wie Icon 88 und platziert es an eine zufällig bestimmte Anzeige-Position in einem größeren Bild 90. Die Position des Icons 88 in dem Bild 90 ist nur dem SafetyController 78 bekannt. Dieses Bild 90 wird als Bilddatei wie Bitmap zur Bedienoberfläche 18 gesendet und dort in einer definierten Position zur Anzeige gebracht, wie dies in Fig. 8 dargestellt ist.

Durch einen Fingertip auf das dargestellte Icon 88 muss der Bediener die vom SafetyController 78 erkannte Betriebsart bestätigen. Eine Berührungs-Position auf dem Touch-Display wird in Form von Touchkoordinaten erfasst und an den SafetyController 78 zurückgesendet. Dieser vergleicht die Berührungs-Position mit der nur dem SafetyController 78 bekannten zufälligen Anzeige-Position des Icons 88 in dem Bild 90. Der Vergleich erfolgt unter Berücksichtigung der bekannten Position des Bildes 90 auf dem Touch-Display 20. Ist die Berührungsposition (innerhalb einer definierten Toleranz) gleich der Anzeigeposition, wird der eingeleitete Betriebsartenwechsel ausgeführt. Andernfalls wird der Betriebsartenwechsel verworfen und die vorherige Betriebsart bleibt erhalten.

Durch dieses Verfahren entsteht ein sicherer Wirkkreis zwischen Bediener und SafetyController 78:
- Bediener wählt eine Betriebsart an,
- SafetyController 78 zeigt die erkannte Betriebsart auf dem Bediengerät 10 an,
- Bediener bestätigt dem SafetyController 78 die Richtigkeit der angezeigten Betriebsart,
- SafetyController 78 stellt die neue Betriebsart ein.

Alternativ zum o. g. Verfahren kann der SafetyController 78 einen ikonisierten Zahlencode anzeigen, der vom Bediener erkannt, und als Zahl über eine angezeigte Tastatur eingegeben werden muss. Die Berührungs-Position der angezeigten Zahlen der Tastatur wird an den SafetyController gesendet, der darüber die Richtigkeit der Eingabe überprüft.

Die Icons 80, 82, 84 sind in dem SafetyController 78 in sicherer Technik gespeichert.

Optional kann eine Anforderung zum Betriebsartenwechsel auch über einen Hardware-Schlüsselschalter kommen.

Das Einstecken/Abziehen des Schlüssels in den Betriebartenwahlschalter wird durch ein Login/Logout-Verfahren mittels PIN nachgebildet.

Die Möglichkeit nach dem Berühren des Touch-Displays 20 den Finger mehr oder weniger zu "ziehen", wird gemäß eines eigenerfinderischen Verfahrens genutzt um eine analoge Verfahrvorgabe für den Industrieroboter 12 zu erzeugen. So kann der Industrieroboter 12 gemäß Fig. 6 in 6 Freiheitsgraden z. B. X, Y, Z und Orientierungen A, B, C eines Werkzeugs 91 feinfühlig gesteuert werden.

Mit der Auslenkung des Fingers einer Bedienperson ist es möglich eine Positionsvorgabe an den Industrieroboter 12 zu geben, ähnlich der Cursorsteuerung per Touchpad bei einem Notebook. Der Industrieroboter 12 lässt sich dabei gleichzeitig in zwei Koordinatenrichtungen, z.B. X und Y, verfahren.

In einem weiteren Modus wird durch eine Auslenkung des Fingers eine Geschwindigkeitsvorgabe für den Industrieroboter 12 erzeugt: je mehr der Finger ausgelenkt ist, umso schneller fährt der Roboter.

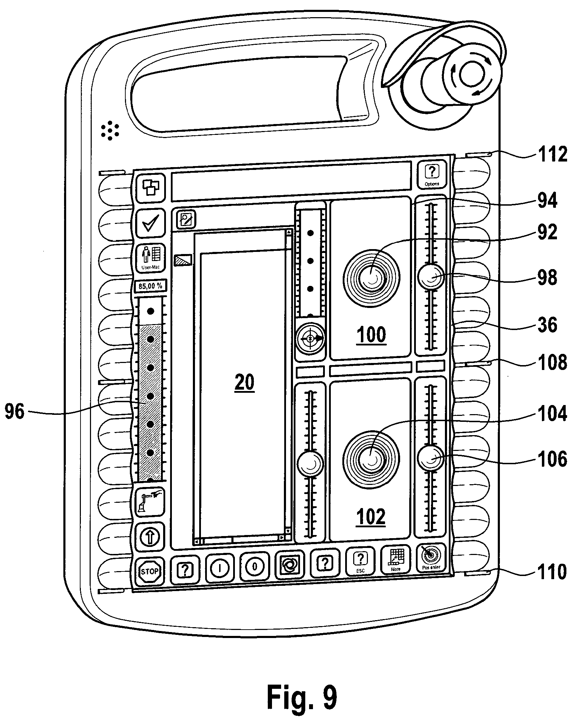

Nach dem Berühren einer in Fig. 9 dargestellten ausgewählten Verfahrfläche 100 aktiviert der Benutzer ein virtuelles Bedienelement 92, das in dem Bereich des Berührungspunktes positioniert wird. Anschließend kann das virtuelle Bedienelement 92 mittels des Fingers auch über eine Begrenzung 94 hinaus über das gesamte Touch-Display 20 gezogen werden und so Fahrvorgaben erzeugen. Nach dem Loslassen bleibt der Industrieroboter 12 sofort stehen. Danach muss für eine erneute Verfahrvorgabe die gewünschte Fläche 100 wieder getroffen werden.

Die Sensibilität der Reaktion auf eine Fingerbewegung kann über ein virtuelles Bedienelement 96 wie Schiebe-Regler (Override) sowohl für die Positionsvorgabe als auch für die Geschwindigkeitsvorgabe stufenlos eingestellt werden.

Die sensitive Fläche 100 für das 2D-Verfahren ist in der Nähe des Displayrandes 36 platziert, so dass sie mit einem deutlichen Abstand zum Displayrand mit dem Finger (z.B. mit dem abgespreizten Daumen) noch gut erreicht werden kann.

Um auch in eine dritte Koordinatenrichtung (z.B. Z-Koordinate des kartesischen Koordinatensystems) verfahren zu können, wird ein etwa fingerbreites Feld 101 mit einem virtuellen Bedienelement 98 direkt seitlich am Displayrand 36 platziert, so dass dieses Feld 101 mit dem Finger "ertastet" werden kann, indem der Finger, insbesondere der Daumen, entlang des Displayrandes 36 geführt wird. Dieses Feld erzeugt eine eindimensionale Verfahrvorgabe, z.B. in Z-Richtung.

Durch die spezielle Anordnung kann der Bediener die zwei Verfahrfelder 100, 101 deutlich unterscheiden und blind erreichen: Das Feld 101 direkt am Displayrand 36, wobei der Finger spürbaren Kontakt mit dem Gehäuserand hat, aktiviert die Verfahrvorgabe für die dritte Dimension (Z-Dimension). Das Feld 100, welches ca. einen Finger- oder Daumenbreit neben dem Displayrand 36 platziert ist, aktiviert die gleichzeitige Verfahrvorgabe in zwei Dimensionen (X-Y-Dimension).

Der Industrieroboter 12 besitzt 6 Freiheitsgrade. Für die Einstellung der Orientierung des Werkzeugs 91 mit den drei Winkeln (A, B, C) wird das gleiche Verfahren wie oben beschrieben verwendet. Dazu wird das Display in zwei Zonen aufgeteilt. In z. B. der oberen Zone befinden sich die Verfahrfelder 100, 101 für die Dimensionen 1-3 (z.B. X, Y, Z). In z. B. der unteren Zone befinden sich die Verfahrfelder 102, 103 für die Dimensionen 4-6 z.B. A, B, C. Über die haptischen Marken in Form von Noppen 108, 110, 112 können die beiden Verfahrfelder 100, 101 und 102, 103 blind unterschieden werden.

Nach dem Berühren der Verfahrfläche 102 aktiviert der Benutzer ein virtuelles Bedienelement 104, das in dem Bereich des Berührungspunktes positioniert wird. Anschließend kann das virtuelle Bedienelement 104 auf dem Touch-Display verschoben werden, um eine Fahrvorgabe zu erzeugen.

Mit einem Multitouch-Display 20 kann der Industrieroboter 12 so in allen 6 Freiheitsgraden simultan verfahren werden. Mit einem Singletouch-Display können die Verfahrfunktionen nur sequentiell verwendet werden.

Beim Verfahren mittels der zuvor erläuterten TouchMotion-Funktion ist das Touch-Display idealerweise kollinear zum Koordinatensystem des Industrieroboters ausgerichtet. In diesem Fall stimmt die Roboterbewegung mit der Fingerbewegung auf dem Touch-Display optimal überein.

Dreht sich jedoch der Bediener mit dem Bediengerät 10 zur Seite weg, so ist diese Übereinstimmung nicht mehr gegeben. Die Bewegungsrichtung des Roboters stimmt dann nicht mehr mit der Bewegungsrichtung des Fingers überein.

Das Koordinatensystem des Touch-Displays muss in diesem Fall wieder zum Koordinatensystem des Roboters rekalibriert werden.

Erfindungsgemäß ist auf dem Touch-Display 20 ein spezielles virtuelles Bedienelement 114 mit einem Zeiger 116 vorgesehen. Dieses Bedienelement 114 muss zunächst mit einem Finger berührt werden und anschließend muss der Finger in die ausgewählte Richtung des Roboter-Koordinatensystems, z. B. X-Richtung, gezogen werden. Zur visuellen Unterstützung des Bedieners kann die X-Richtung in dem Arbeitsbereich des Roboters z. B. durch eine Markierung auf der Bodenfläche gekennzeichnet werden. Die Bewegung des Fingers auf dem Bedienelement 114 und damit die Ausrichtung des Zeigers 116 erfolgt parallel zu der im Arbeitsbereich des Roboters vorhandenen Markierung. Eine solche ist beispielhaft in Fig. 6 mit "200" gekennzeichnet. Nach dem Abheben des Fingers von dem Touch-Display 20 wird die Vektorrichtung zwischen dem ersten Berührungspunkt und dem Loslasspunkt berechnet. Mit Hilfe dieses Vektors, der ausgewählten Roboter-Koordinatenachse und einem gemeinsamen Z-Vektor wird eine Rotationsmatrix berechnet, über die fortan alle Fingerbewegungen transformiert werden, bevor sie als Verfahrvorgabe an den Roboter gegeben werden. Die Rekalibrierung erfolgt somit schnellstmöglich mit einer einzigen Geste. Nach der Rekalibrierung sind beide Koordinatensysteme wieder kollinear zueinander eingestellt, quasi eingenordet. Zur besseren Überprüfbarkeit wird die Richtung des kalibrierten Display-Koordinatensystems grafisch auf dem Touch-Display dargestellt.

Das Koordinatensystem für den Roboter ist in Fig. 6 eingezeichnet. Man erkennt, dass die Markierung 200 parallel zur X-Achse verläuft. Die Y-Achse verläuft in der Ebene der Standfläche des Roboters 12. Senkrecht hierzu verläuft die Z-Achse, um die der Roboter 12 drehbar ist (Pfeil A1).

In den Fig. 1 und 6 werden durch die Pfeile 1, 2, 3, 4, 5, 6 bzw. A1, A2, A3, A4, A5, A6 die Schwenk- bzw. Drehbewegungen des Roboters 12 bzw. des das Werkzeug 91 haltenden Arms gekennzeichnet. Somit kann im Ausführungsbeispiel der Roboter 12 mit 6 Freiheitsgraden das Werkzeug 91 bewegen.

Diese erfindungsgemäße Kalibrierungsmethode, die ohne Sensorik arbeitet, kann auch für beliebige andere Koordinatensysteme, wie z. B. frei definierbare Frames, verwendet werden.

## Patentansprüche

1. Verfahren zur Bedienung eines Industrieroboters (12) mittels eines ein grafisches Bediener-Interface (18) mit Touch-Display (20) aufweisenden Bediengerätes (10), umfassend die Verfahrensschritte:
- Anzeigen zumindest eines eine Funktion oder Betriebsart des Industrieroboters (12) repräsentierenden virtuellen Bedienelementes (80, 82, 84) auf dem Touch-Display (20),
- Auswahl einer gewünschten Funktion oder Betriebsart durch Betätigen des zumindest einen virtuellen Bedienelementes (80, 82, 84) durch einen Bediener,
- Erfassen der Betätigung des zumindest einen virtuellen Bedienelementes (80, 82, 84) und Aussenden eines der ausgewählten Funktion oder Betriebsart entsprechenden Steuersignals an eine Sicherheitssteuerung (78),
- Auswertung des Steuersignals in der Sicherheitssteuerung (78) und Auswahl einer der ausgewählten Funktion oder Betriebsart zugeordneten grafischen Information (88),
- Erzeugen eines Bildes (90), in dem die grafische Information (88) an einer von der Sicherheitssteuerung (78) bestimmten Anzeige-Position positioniert ist,
- Übertragung des Bildes (90) an das Bediengerät (10) und Anzeige des Bildes (90) mit der grafischen Information (88) auf dem Touch-Display (20),
- Erfassen einer Bestätigungs-Position bei Bestätigung der angezeigten grafischen Information (88) durch den Bediener,
- Rücksenden der Bestätigungs-Position an die Sicherheitssteuerung (78),
- Vergleich der empfangenen Bestätigungs-Position mit der vorgegebenen Anzeige-Position,
- Ausführen der gewählten Funktion oder Betriebsart, wenn die Bestätigungs-Position mit der Anzeige-Position übereinstimmt.

2. Verfahren nach Anspruch 1,
**dadurch gekennzeichnet,**
**dass** die Anzeige-Position der grafischen Information (88) innerhalb des Bildes (90) zufällig bestimmt wird.

3. Verfahren nach Anspruch 1 oder 2,
**dadurch gekennzeichnet,**
**dass** das Bild (90) als Bilddatei wie Bitmap von der Sicherheitssteuerung (78) zu dem Bediengerät (10) übertragen und auf dem Touch-Display (20) an einer von der Sicherheitsteuerung vorgegebenen oder der Sicherheitssteuerung bekannten Position angezeigt wird.

4. Verfahren nach zumindest einem der vorhergehenden Ansprüche,
**dadurch gekennzeichnet,**
**dass** als grafische Information (88) ein der Funktion oder Betriebsart entsprechendes virtuelles Bedienelement angezeigt wird.

5. Verfahren nach zumindest einem der vorhergehenden Ansprüche,
**dadurch gekennzeichnet,**
**dass** als grafische Information (88) bildhaft ein Zahlencode angezeigt wird.

6. Verfahren nach zumindest einem der vorhergehenden Ansprüche,
**dadurch gekennzeichnet,**
**dass** die grafische Information (88) in einem Speicher (86) der Sicherheitssteuerung (78) in sicherer Technik vorzugsweise zweikanalig gespeichert wird.

7. Verfahren nach zumindest einem der vorhergehenden Ansprüche,
**dadurch gekennzeichnet,**
**dass** die Auswertung des Steuersignals in der Sicherheitssteuerung (2) zweikanalig erfolgt.

8. Verfahren nach zumindest einem der vorhergehenden Ansprüche,
**dadurch gekennzeichnet,**
**dass** auf dem Touch-Display (20) des grafischen Bediener-Interfaces (18) verschiedene Betriebsarten/-optionen in Form der virtuellen Bedienelemente (80, 82, 84) angezeigt werden.

9. Verfahren nach zumindest einem der vorhergehenden Ansprüche,
**dadurch gekennzeichnet,**
**dass** Koordinaten der Anzeige-Position durch einen Zufallsgenerator generiert werden.

10. Verfahren nach zumindest einem der vorhergehenden Ansprüche,
**dadurch gekennzeichnet,**
**dass** die Berührung des virtuellen Bedienelementes (80, 82, 84) auf der Oberfläche des Touch-Displays (20) durch Ermitteln einer ersten Koordinate eines Berührungspunktes erfasst wird und dass eine Auslösung der Funktion des virtuellen Bedienelementes (80, 82, 84) erfolgt, wenn die erste Koordinate des Berührungspunktes nach bleibendem Kontakt mit der Oberfläche des Touch-Displays einen vorgegebenen Koordinatenbereich durch eine manuelle Aktion der Bedienperson verlässt.

11. Verfahren nach Anspruch 10,
**dadurch gekennzeichnet,**
**dass** die manuelle Aktion durch eine Gestik der Bedienperson ausgelöst wird.

12. Verfahren nach Anspruch 10 bis 11,
**dadurch gekennzeichnet,**
**dass** die Gestik durch Ziehen eines Fingers der Bedienperson auf dem Touch-Display (20) in den oder aus dem vorgegebenen Koordinatenbereich ausgeführt wird.

13. Verfahren nach Anspruch 10 bis 12,
**dadurch gekennzeichnet,**
**dass** die Gestik in eine definierte Richtung ausgeführt wird.

14. Verfahren nach Anspruch 10 bis 13,
**dadurch gekennzeichnet,**
**dass** eine Intensität der Gestik stufenlos eingestellt wird.

## Claims

1. Method for operating an industrial robot (12) by means of an operating device (10) having a graphic user interface (18) with touch display (20), comprising the steps:
- displaying of at least one virtual operating element (80, 82, 84) representing a function or operating mode of the industrial robot (12) on the touch display (20),
- selecting of a desired function or operating mode by activating the at least one virtual operating element (80, 82, 84) by a user,
- detecting of the activating of the at least one virtual operating element (80, 82, 84) and sending of a control command corresponding to the selected function or operating mode to a safety controller (78),
- evaluating of the control signal in the safety controller (78) and selection of a graphic information (88) correlated with the selected function or operating mode,
- generating of an image (90) in which the graphic information (88) is positioned at a display position determined by the safety controller (78),
- transmission of the image (90) to the operating device (10) and display of the image (90) with the graphic information (88) on the touch display (20),
- detecting of a confirmation position upon the user confirming the displayed graphic information (88),
- sending back the confirmation position to the safety controller (78),
- comparing of the received confirmation position with the predetermined display position,
- performing of the selected function or operating mode if the confirmation position matches up with the display position.

2. Method according to claim 1,
**characterized in that**
the display position of the graphic information (88) within the image (90) is determined randomly.

3. Method according to claim 1 or 2,
**characterized in that**
the image (90) is transmitted as a graphic file, such as a bitmap, from the safety controller (78) to the operating device (10) and is presented on the touch display (20) in a position dictated by the safety controller or known to the safety controller.

4. Method according to at least one of the preceding claims,
**characterized in that**
a virtual operating element corresponding to the function or operating mode is displayed as the graphic information (88).

5. Method according to at least one of the preceding claims,
**characterized in that**
a numerical code is displayed graphically as the graphic information (88).

6. Method according at least one of the preceding claims,
**characterized in that**
the graphic information (88) is kept securely in a memory (86) of the safety controller (78), preferably in two channels.

7. Method according at least one of the preceding claims,
**characterized in that**
the evaluation of the control signal occurs in the safety controller (2) in two channels.

8. Method according to at least one of the preceding claims,
**characterized in that**
various operating modes or options are shown on the touch display (20) of the graphic user interface (18) in the form of virtual operating elements (80, 82, 84).

9. Method according at least one of the preceding claims,
**characterized in that**
the coordinates of the display position are generated by a random number generator.

10. Method according at least one of the preceding claims,
**characterized in that**
the touching of the virtual operating element (80, 82, 84) on the surface of the touch display (20) is detected by determining a first coordinate of a point of contact and a triggering of the function of the virtual operating element (80, 82, 84) occurs if the first coordinate of the point of contact after a lasting contact with the surface of the touch display leaves a predetermined coordinate region by a manual action of the user.

11. Method according to claim 10,
**characterized in that**
the manual action can be triggered by a gesture of the user.

12. Method according to claims 10 to 11,
**characterized in that**
the gesture is performed by the user dragging a finger on the touch display (20) into or out from the predetermined coordinate region.

13. Method according to claims 10 to 12,
**characterized in that**
the gesture is performed in a defined direction.

14. Method according to claims 10 to 13,
**characterized in that**
the intensity of the gesture is adjusted continuously.

## Revendications

1. Procédé de commande d'un robot industriel (12) au moyen d'un appareil de commande (10) présentant une interface utilisateur graphique (18) avec écran tactile (20), ledit procédé comprenant les étapes suivantes :
- affichage sur l'écran tactile (20) d'au moins un élément de commande virtuel (80, 82, 84) représentant une fonction ou un mode de service du robot industriel (12),
- sélection d'une fonction ou d'un mode de service souhaité(e) par actionnement par un opérateur de l'au moins un élément de commande virtuel (80, 82, 84),
- saisie de l'actionnement de l'au moins un élément de commande virtuel (80, 82, 84) et envoi à une commande de sécurité (78) d'un signal de commande correspondant à la fonction ou au mode de service sélectionné(e),
- analyse du signal de commande dans la commande de sécurité (78) et sélection d'une information graphique (88) associée à la fonction ou au mode de service sélectionné(e),
- création d'une image (90) dans laquelle l'information graphique (88) est positionnée sur une position d'affichage déterminée par la commande de sécurité (78),
- transmission de l'image (90) à l'appareil de commande (10) et affichage sur l'écran tactile (20) de l'image (90) avec l'information graphique (88),
- saisie d'une position de validation en cas de validation par l'opérateur de l'information graphique (88) affichée,
- renvoi de la position de validation à la commande de sécurité (78),
- comparaison de la position de validation reçue avec la position d'affichage prédéterminée,
- exécution de la fonction ou du mode de service sélectionné(e) si la position de validation coïncide avec la position d'affichage.

2. Procédé selon la revendication 1,
**caractérisé en ce**
**que** la position d'affichage de l'information graphique (88) dans l'image (90) est déterminée de manière aléatoire.

3. Procédé selon la revendication 1 ou 2,
**caractérisé en ce**
**que** l'image (90) est transmise de la commande de sécurité (78) à l'appareil de commande (10) sous forme de fichier image, tel que bitmap, et est affichée sur l'écran tactile (20) à une position prédéfinie par la commande de sécurité ou connue de la commande de sécurité.

4. Procédé selon au moins une des revendications précédentes,
**caractérisé en ce**
**qu'**en tant qu'information graphique (88) est affiché un élément de commande virtuel correspondant à la fonction ou au mode de service.

5. Procédé selon au moins une des revendications précédentes,
**caractérisé en ce**
**qu'**en tant qu'information graphique (88) est affiché un code numérique sous forme d'image.

6. Procédé selon au moins une des revendications précédentes,
**caractérisé en ce**
**que** l'information graphique (88) est stockée dans une mémoire (86) de la commande de sécurité (78) dans une unité technique sûre de préférence à deux voies.

7. Procédé selon au moins une des revendications précédentes,
**caractérisé en ce**
**que** l'analyse du signal de commande a lieu sur deux voies dans la commande de sécurité (2).

8. Procédé selon au moins une des revendications précédentes,
**caractérisé en ce**
**que** sur l'écran tactile (20) de l'interface utilisateur graphique (18) sont affichés plusieurs modes/options de service sous la forme des éléments de commande virtuels (80, 82, 84).

9. Procédé selon au moins une des revendications précédentes,
**caractérisé en ce**
**que** les coordonnées de la position d'affichage sont générées par un générateur de nombres aléatoires.

10. Procédé selon au moins une des revendications précédentes,
**caractérisé en ce**
**que** le fait de toucher l'élément de commande virtuel (80, 82, 84) sur la surface de l'écran tactile (20) est saisi par détermination d'une première coordonnée d'un point de contact, et qu'un déclenchement de la fonction de l'élément de commande virtuel (80, 82, 84) a lieu quand la première coordonnée du point de contact, après contact ininterrompu avec la surface de l'écran tactile, quitte une plage de coordonnées prédéfinie suite à une action manuelle de l'opérateur.

11. Procédé selon la revendication 10,
**caractérisé en ce**
**que** l'action manuelle est déclenchée par un geste de l'opérateur.

12. Procédé selon la revendication 10 à 11,
**caractérisé en ce**
**que** le geste est réalisé par glissement d'un doigt de l'opérateur sur l'écran tactile (20) dans ou hors de la plage de coordonnées prédéfinie.

13. Procédé selon la revendication 10 bis 12,
**caractérisé en ce**
**que** le geste est exécuté dans une direction définie.

14. Procédé selon la revendication 10 bis 13,
**caractérisé en ce**
**qu'**une intensité du geste est réglée en continue.
